# EUROPÄISCHE PATENTANMELDUNG

(11) **EP 0 970 734 A1**
(43) Veröffentlichungstag der Anmeldung: **12.01.2000**
(21) Anmeldenummer: 99112492.6
(22) Anmeldetag: 01.07.1999
(51) Int. Cl.: B01D 3/00, C02F 1/04, B01D 1/00, B01D 61/14, B01D 17/04

(54) **Verfahren und Anlage zur Aufbereitung von ölhaltigen Emulsionen**

(30) Priorität: 04.07.1998 DE 19830046
(71) Anmelder: Sommer, Eva Maria, 65189 Wiesbaden (DE)
(72) Erfinder: Hejna, Jochen, 67157 Wachenheim (DE)
(74) Vertreter: Henseler, Daniela, Dr., Patentanwälte, Sparing, Röhl, Henseler

(57) **Zusammenfassung**

Die Erfindung betrifft ein Verfahren zur prozeß- und kanalfähigen Aufbereitung von ölhaltigen Emulsionen durch atmosphärisches Verdampfen und Abtrennen eines wässrigen Kondensats von einem aufkonzentrierten Sumpf, wobei das wässrige Kondensat in einem noch erwärmten Zustand nachträglich unter Abtrennen emulgierter und nichtemulgierter Öle filtriert und einem Ablauf zugeleitet wird, während ein zurückgehaltenes Filtrationskonzentrat neben dem aufkonzentrierten Sumpf einer Entsorgung zugeführt wird.

## Beschreibung

Die Erfindung betrifft ein Verfahren zur prozeß- und kanalfähigen Aufbereitung von ölhaltigen Emulsionen nach dem Oberbegriff des Anspruchs 1 und eine Anlage hierzu nach dem Oberbegriff des Anspruchs 8.

Ein derartiges Verfahren und eine derartige Anlage sind aus DE 42 21 518 C2 bekannt. Danach wird Sondermüll in Form von wässrigen, ölhaltigen Emulsionen in einem Siedekessel durch Erhitzen in eine Gasphase überführt und durch Abkühlen wieder verflüssigt. Ein damit verbundener Reinigungseffekt erlaubt die Abtrennung von Schwermetallen, Salzen sowie Ölen, so daß ein prozeß- und kanalfähiges Kondensat entsteht. Als nachteilig hat sich jedoch erwiesen, daß insbesondere hochmolekulare Stoffe bei der Verdampfung teilweise mitgerissen werden in die Gasphase und dann zu einer unerwünschten Restverunreinigung des Kondensats führen.

Aufgabe der Erfindung ist es daher, ein Verfahren zur prozeß- und kanalfähigen Aufbereitung von ölhaltigen Emulsionen der genannten Art und eine Anlage hierzu zu schaffen, die eine Auftrennung der in der metaliverarbeitenden Industrie anfallenden ölhaltigen Emulsionen verbessern.

Diese Aufgabe wird durch die Merkmale des kennzeichnenden Teils der Ansprüche 1 bzw. 8 gelöst.

Hierdurch wird ein Verfahren geschaffen, das eine chemisch-physikalische Behandlung der Emulsionen mit einer mechanisch-physikalischen kombiniert. Als chemisch-physikalische Behandlung ist ein thermisches Verfahren unter atmosphärischem Druck vorgesehen, bei dem flüchtige Bestandteile, insbesondere ein Wasseranteil, als Kondensat abgetrennt wird. Schwermetalle, Salze als auch öle verbleiben als Rückstand. Überraschenderweise hat sich herausgestellt, daß das noch erwärmte Kondensat bei einer nachträglichen Filtration die Abtrennung restlicher Öle in wirtschaftlicher Weise erlaubt. Die Pflege eines Entfettungsbades als auch die Reinigung von Kühlschmiermittelemulsionen ist somit in zuverlässiger Weise möglich, da die Abscheidung quantitativ verbessert ist.

Eine Abtrennung enthaltener disperser Systeme erfolgt demnach stufenweise, wobei die atmosphärische Verdampfung als Vorstufe für eine Filtration unter Abtrennung emulgierter Öle Standzeiten eines Filtermediums und Durchflußraten wesentlich erhöht.

Der Einsatz einer atmosphärischen Verdampfung ermöglicht gleichzeitig die Vernichtung von Bakterien, da das Verdampfen bei Sterilisationstemperaturen erfolgen kann.

Um den thermischen Trennungsvorgang für dispergierte Systeme nicht zu belasten, können nichtdispergierte Systeme, insbesondere Oberflächenöle, über eine vorgeschaltete Kaskadenführung entfernt werden.

Als Filtration bevorzugt ist die Ultrafiltration, die insbesondere hochmolekulare Stoffe von einem Permeat abtrennt.

Die bei der Verdampfung auftretende Abwärme kann in das Aufbereitungsverfahren zurückgeführt werden und dort für eine Vorwärmung der zu verdampfenden Emulsionen eingesetzt werden.

Das aus der Verdampfung folgende Kondensat kann in einem erwärmten Zustand gehalten werden, wozu eine wärmeisolierte Zwischenspeicherung dienen kann. Mögliche unterschiedliche Durchsatzraten der Verdampfung und der Flitration können mittels einer solchen Zwischenspeicherung aufeinander abgestimmt werden.

Als besonders vorteilhaft hat sich erwiesen, das Kondensat bei Temperaturen zwischen 60% und 90% der Filtration zuzuführen.

Eine erfindungsgemäße Anlage zur prozeß- und kanalfähigen Aufbereitung von ölhaltigen Emulsionen ist kompakt und erlaubt eine sicherere Abtrennung dispergierter Systeme mit einer hohen Durchsatzrate.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

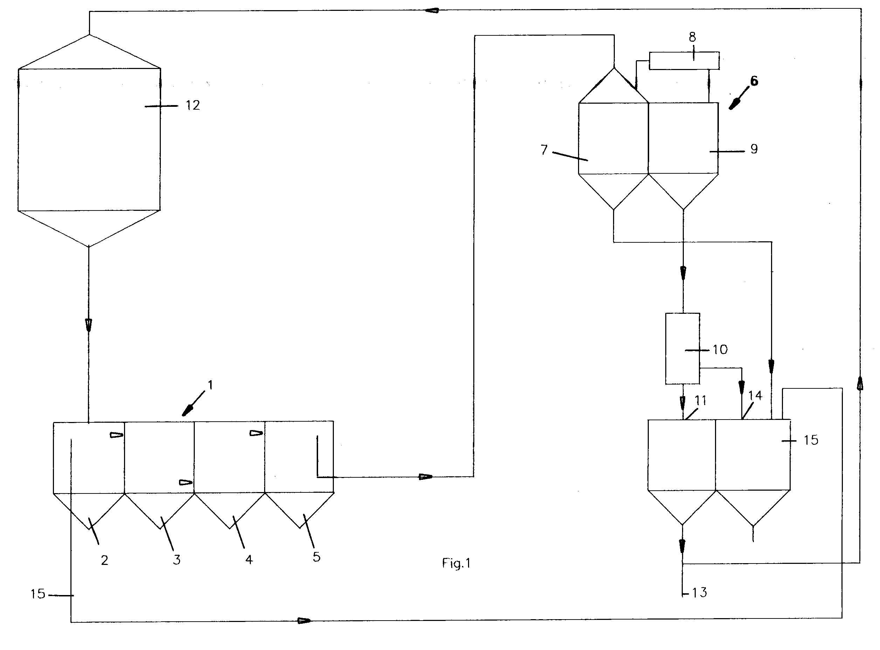

- Fig. 1: zeigt schematisch eine erfindungsgemäße Anlage zur Durchführung eines erfindungsgemäßen Verfahrens zur prozeß- und kanalfähigen Aufbereitung von ölhaltigen Emulsionen gemäß einem Ausführungsbeispiel.

Die Erfindung betrifft ein Verfahren zur prozeß- und kanalfähigen Aufbereitung von ölhaltigen Emulsionen, wie sie insbesondere bei einem Entfettungsbad und/oder bei der metallverarbeitenden Industrie anfallen.

Mittels einer Aufbereitung sind Verunreinigungen, wie insbesondere Öle, Salze, Schwermetalle, Feststoffe usw. von einem Wasseranteil abzutrennen, um den Wasseranteil einem Kanal zuzuführen oder zurück in den Prozeß führen zu können.

Hierzu ist gemäß Fig. 1 vorgesehen, daß eine aufzubereitende ölhaltige Emulsion zunächst eine Kaskade 1 durchläuft, die in einer Durchlaufrichtung mehrere hintereinander angeordnete Kammern 2, 3, 4, 5 aufweist. Die Zahl der Kammern bestimmt eine Stufigkeit der Kaskade 1. Eine solche Kaskade dient der Abtrennung nichtemulgierter Stoffe, also insbesondere sogenannte Oberflächenöle. Die Kaskade 1 kann entfallen, insbesondere dann, wenn die Menge an nichtemulgierten Stoffen gering ist, da nachfolgende Aufbereitungsschritte auch eine Abtrennung nichtemulgierter Stoffe erlauben.

Aus der Kaskade 1 oder zu Beginn einer Aufbereitung ölhaltiger Emulsionen gelangt die Emulsion in einen atmosphärischen Verdampfer 6. Dort wird die aufzubereitende Emulsion atmosphärisch verdampft und ein wässriges Kondensat von einem aufkonzentrierten Sumpf abgetrennt.

Dazu umfaßt der atmosphärische Verdampfer 6 einen Siedekessel 7, der kopfseitig einen Dampfauslaß aufweist, der mit einem Kühler 8 verbunden ist. In dem Kühler 8 verflüssigt sich die durch Verdampfen gebildete Gasphase in ein wässriges Kondensat, das in einen Kondensatsammelbehälter 9 gelangt. Dieser Kondensatsammelbehälter 9 ist vorzugsweise wärmeisoliert, damit das wässrige Kondensat in einem erwärmten Zustand gehalten wird auch dann, wenn das Kondensat während eines wählbaren Zeitabschnitts gespeichert wird. Dies ist insbesondere dann der Fall, wenn die Durchlaufrate eines nachfolgenden Aufbereitungsvorganges größer ist als eine Verdampfungsrate. Das atmosphärische Verdampfen erfolgt vorzugsweise bei für eine Sterilisation hinreichenden Temperaturen.

Das wässrige Kondensat wird in einem noch erwärmten Zustand nachträglich unter Abtrennen emulgierter und nichtemulgierter Öle filtriert. Dazu ist ein Auslaß des Kondensatsammelbehälters 9 mit einem Eingang einer Filtrationsanlage 10 verbunden. Ein Filtrat wird einem Ablauf 11 der Filtrationsanlage zugeleitet, von wo es zurück zu einem Prozeßvorgang 12 oder in einen Kanal 13 abgegeben werden kann. Das Kondensat wird vorzugsweise bei Temperaturen zwischen 60°C und 90°C, insbesondere 70°C bis 80°C, der Filtration zugeführt.

Ein dagegen zurückgehaltenes Filtrationskonzentrat wird über einen anderen Auslaß 14 einer Entsorgung 15 zugeführt. Dieser Entsorgung 15 wird ebenfalls der in dem Siedekessel 7 aufkonzentrierte Sumpf zugeführt, dazu kann die Entsorgung 15 einen gemeinsamen Auffangbehälter umfassen.

Die Filtrationsanlage 10 ist vorzugsweise als eine Ultrafiltrationsanlage ausgebildet.

## Patentansprüche

1. Verfahren zur prozeß- und kanalfähigen Aufbereitung von ölhaltigen Emulsionen durch atmosphärisches Verdampfen und Abtrennen eines wässrigen Kondensats von einem aufkonzentrierten Sumpf, dadurch gekennzeichnet, daß das wässrige Kondensat in einem noch erwärmten Zustand nachträglich unter Abtrennen emulgierter und nichtemulgierter Öle filtriert und einem Ablauf zugeleitet wird, während ein zurückgehaltenes Filtrationskonzentrat neben dem aufkonzentrierten Sumpf einer Entsorgung zugeführt wird.

2. Verfahren nach Anspruch 1, dadurch gekennzeichnet, daß das atmosphärische Verdampfen bei für eine Sterilisation hinreichenden Temperaturen erfolgt.

3. Verfahren nach Anspruch 1 oder 2, dadurch gekennzeichnet, daß die ölhaltigen Emulsionen zunächst eine Kaskade durchlaufen, bevor sie atmosphärisch verdampft werden.

4. Verfahren nach einem der Ansprüche 1 bis 3, dadurch gekennzeichnet, daß das Filtrieren durch eine Ultrafiltration erfolgt.

5. Verfahren nach einem der Ansprüche 1 bis 4, dadurch gekennzeichnet, daß eine Abwärme des Kondensators zum Vorwärmen der ölhaltigen Emulsionen verwendet wird.

6. Verfahren nach einem der Ansprüche 1 bis 5, dadurch gekennzeichnet, daß das Kondensat vor dem Filtrieren wärmeisoliert zwischengespeichert wird.

7. Verfahren nach einem der Ansprüche 1 bis 6, dadurch gekennzeichnet, daß das Kondensat bei Temperaturen zwischen 60% und 90% der Filtration zugeführt wird.

8. Anlage zur prozeß- und kanalfähigen Aufbereitung von ölhaltigen Emulsionen mit einem atmosphärischen Verdampfer zum Aufkonzentrieren der ölhaltigen Emulsionen in einem Siedekessel, der über einen Kondensator mit einem Kondensatsammelbehälter verbunden ist, dadurch gekennzeichnet, daß für eine Nachfiltration eines im Kondensatsammelbehälter (9) gesammelten Kondensats der Kondensatsammelbehälter (9) einen Kondensatausgang aufweist, der an einem Eingang einer Ultrafiltrationsanlage (10) angeschlossen ist.

9. Anlage nach Anspruch 8, dadurch gekennzeichnet, daß dem atmosphärischen Verdampfer (6) eine Kaskade (1) zur Abtrennung von Oberflächenölen vorgeschaltet ist.

10. Anlage nach Anspruch 8 oder 9, dadurch gekennzeichnet, daß ein Ausgang der Ultrafiltrationsanlage (10) für ein Konzentrat und ein Ausgang (14) des Siedekessels (7) für einen aufkonzentrierten Sumpf mit einem gemeinsammen Auffangbehälter (15) verbunden sind.

11. Anlage nach einem der Ansprüche 8 bis 10, dadurch gekennzeichnet, daß der Kondensatsammelbehälter (9) mit einer wärmeisolierenden Außenwandung ausgestattet ist.
